Europäisches Patentamt

European Patent Office

Office européen des brevets

(11) Numéro de publication : **0 081 448**
**B1**

(12) **FASCICULE DE BREVET EUROPÉEN**

(45) Date de publication du fascicule du brevet :
10.09.86

(51) Int. Cl.⁴ : **C 21 C 5/32, C 21 C 5/46**

(21) Numéro de dépôt : **82630074.1**

(22) Date de dépôt : **22.07.82**

(54) Procédé et dispositif pour l'affinage d'un bain de métal contenant des matières refroidissantes solides.

(30) Priorité : **04.12.81 LU 83814**

(43) Date de publication de la demande :
**15.06.83 Bulletin 83/24**

(45) Mention de la délivrance du brevet :
**10.09.86 Bulletin 86/37**

(84) Etats contractants désignés :
**AT BE DE FR GB IT NL SE**

(56) Documents cités :
**DE-A- 1 583 240**
**FR-A- 1 202 754**
**FR-A- 1 250 496**
**FR-A- 1 315 021**
**FR-A- 1 322 636**
**FR-A- 2 322 202**
**FR-A- 2 352 887**
**FR-A- 2 411 239**
**LU-A-   78 906**

(73) Titulaire : **ARBED S.A.**
**Avenue de la Liberté 19**
**L-2930 Luxembourg (LU)**

(72) Inventeur : **Metz, Paul**
**18 rue J.P.Brasseur**
**L-1258 Luxembourg (LU)**
Inventeur : **Schleimer, Francois**
**3 rue Bessemer**
**L-4032 Esch/Alzette (LU)**
Inventeur : **Goedert, Ferdinand**
**10 rue Bessemer**
**L-4032 Esch/Alzette (LU)**
Inventeur : **Henrion, Romain**
**127 rue J.P. Michels**
**L-4243 Esch/Alzette (LU)**
Inventeur : **Klein, Henri**
**Avenue de la Liberté 141**
**L-4602 Niedercorn (LU)**
Inventeur : **Liesch, Jean-Francois**
**41 rue Jean Baptiste Esch**
**L-1473 Luxembourg (LU)**

(74) Mandataire : **Neyen, René et al**
**Administration Centrale de l'Arbed Case postale 1802**
**L-2930 Luxembourg (LU)**

Jouve, 18, rue St-Denis, 75001 Paris, France

EP 0 081 448 B1

## Description

La présente invention concerne un procédé et un dispositif pour l'affinage d'un bain de métal contenant des quantités importantes de matières refroidissantes solides, notamment des mitrailles.

Il existe plusieurs moyens pour augmenter la capacité d'enfournement de mitrailles au cours d'un processus d'affinage. On peut, p. ex. prévoir un préchauffage de ces mitrailles, ce qui nécessite la mise en œuvre de sources de chaleur, telles que des brûleurs au gaz, à l'huile lourde ou, suivant des procédés plus sophistiqués et aussi plus onéreux, des brûleurs au plasma.

Un autre moyen consiste à incorporer au métal en voie d'affinage des matières susceptibles de réagir avec l'oxygène d'affinage avec un dégagement simultané d'énergie, notamment du carbone. L'introduction de carbone par lance submergée et à l'aide de gaz porteurs neutres est une possibilité qui est à écarter, étant donné qu'il est difficile de concevoir une opération de ce genre qui se déroulerait simultanément avec l'affinage. Pour ce qui est de l'incorporation de carbone par des tuyères logées dans le fond du convertisseur, il y a lieu de relever qu'en vue d'empêcher le blocage de ces conduits, il faut prévoir une alimentation continue en gaz porteur, d'une envergure importante, ce qui pose des problèmes de refroidissement du métal en fusion. En effet le refroidissement du métal par le gaz porteur n'est pas de nature à favoriser la mise en solution du carbone dans le métal, qui est une réaction nettement endothermique.

On a également essayé de recarburer des bains de métal par addition de carbone par le haut. Ainsi le document FR-A-2 459 835 décrit un procédé qui prévoit que l'on souffle sur la surface du bain du carbure de calcium et ceci en utilisant l'oxygène d'affinage comme véhicule du carbure, lequel présente une granulométrie de 0,01 à 1 mm. Il s'avère que le carbure véhiculé par l'oxygène ne s'oxyde pas, ce qui peut surprendre et ce que les auteurs de ce document attribuent au fait que le jet d'oxygène chargé du carbure subit à la sortie de la lance une détente accompagnée d'un refroidissement vigoureux. Les carbures sont des composés chimiques que l'on obtient par des réactions consommatrices de grandes quantités d'énergie, si bien que la recarburation d'un bain de métal opérée en vue d'aboutir à des bénéfices sur le plan énergétique, devrait exclure la mise en œuvre de matières telles que les carbures.

D'après le document DE-A-1 583 240 il est connu d'introduire dans un procédé d'affinage d'acier par soufflage d'oxygène par le haut, du carbone dans le bain métallique, afin de fondre une quantité de ferraille supplémentaire. La lance qui introduit le carbone dans le bain est reliée à un réservoir de matière carbonée ainsi qu'à un compresseur pour milieu liquide ou gazeux et comporte de préférence dans son prolongement un dispositif mélangeur qui plonge dans le bain métallique. Ce mélangeur décrit un mouvement de rotation. En rapprochant l'embouchure de la lance de la surface du bain, la profondeur de pénétration du carbone dans le bain est améliorée.

Le but de l'invention est de proposer un procédé et un dispositif pour l'affinage d'acier, contenant des quantités importantes de mitrailles et dans lequel on crée l'énergie nécessaire à la mise en fusion du métal solide par un apport de carbone et ceci en évitant d'une part une combustion prématurée du carbone au-dessus du bain et d'autre part les effets secondaires gênants comme le moussage de la scorie au cours de l'addition de carbone.

Ce but est atteint selon l'invention par un procédé et un dispositif tels qu'exposés dans les revendications 1 et 7 respectivement.

Suivant l'invention l'oxygène soufflé sur la surface du bain est constitué d'une part par au moins un jet dur que l'on dirige sur le bain sous un angle de 5° à 20° par rapport au jet carbone/gaz neutre et a une vitesse sensiblement égale, c.-à-d. de l'ordre de Mach 1.5 à 2.5, et d'autre part, par au moins un jet mou d'une vitesse d'environ Mach 0.8 à 1.5 et dont l'axe est incliné de 25° à 60° par rapport à l'axe du jet dur d'oxygène. En effet ce jet dur étant destiné à effectuer l'affinage proprement dit, il est utile qu'il soit dirigé sur le bain sous un angle assez réduit pour garantir une pénétration de l'oxygène dans le bain, tandis que le jet mou est destiné à répartir de l'oxygène sur toute la surface du bain, à l'exception de la zone du centre, pour effectuer la post-combustion du monoxyde de carbone formé au cours de l'affinage par oxydation du carbone du bain et qui est dégagé à la surface.

Ainsi les jets durs d'oxygène sont disposés de part et d'autre du jet central, vertical, constitué de carbone et de gaz neutre. Une forme d'exécution préférée du procédé suivant l'invention prévoit 4 jets durs qui forment un rideau autour du jet central de carburation.

A la sortie du dispositif de soufflage le carbone, suspendu dans le jet de gaz neutre, subit avec celui-ci une forte détente, ce qui peut être assuré en dotant la tête du dispositif de buses présentant un convergent suivi d'un divergent. La vitesse du jet étant de l'ordre de Mach 2, les particules de carbone sont exposées entre la sortie de la lance de soufflage et la surface du bain pendant environ 0,02 sec. seulement ; leur température à la sortie est abaissée. Ainsi le risque d'une oxydation prématurée du carbone est pratiquement supprimé, d'abord grâce au gaz porteur neutre et ensuite grâce à la courte durée d'exposition et à la température basse.

Suivant l'invention on injecte dans le bain par le fond du creuset au cours de l'affinage une quantité de 0 à 0.3 Nm3 de gaz neutre par minute et par tonne de métal. Ainsi on évite que le fort dégagement de gaz lors de l'impact du carbone sur la scorie et sur le métal résulte en une formation de mousse ; en effet une scorie mousseuse s'opposerait d'une part à la pénétration du carbone dans le bain et d'autre part la couche épaisse de scorie mousseuse empêcherait la propagation vers le métal de l'énergie thermique créée par la post-combustion du monoxyde de carbone au-dessus du bain.

On peut en effet démontrer qu'à défaut d'une injection de gaz neutre par le fond du creuset, l'absorption du carbone par le métal est fortement gênée. Ceci résulte non seulement en un mauvais rendement en carbone solubilisé et à disposition pour fournir de l'énergie thermique dans le bain même, mais également en une combustion intégrale du carbone au-dessus du bain qui peut détruire l'installation de soufflage et même le système de refroidissement de la cheminée.

La granulométrie du carbone injecté est de préférence telle qu'au moins 90 % des particules présentent un diamètre inférieur à 1 mm.

Le rôle du dispositif de soufflage utilisé dans le cadre d'un procédé d'affinage tel qu'il a été décrit, est complexe. En effet l'oxygène doit d'une part pénétrer dans le bain pour qu'il y ait décarburation et doit d'autre part être réparti sur le bain pour qu'il y ait post-combustion du monoxyde de carbone dégagé. Il faut en plus assurer que l'oxygène de post-combustion soit dirigé sur la surface du bain d'une manière telle que la post-combustion du monoxyde de carbone se déroule à proximité de la surface et non pas dans des régions supérieures où l'énergie dégagée ne servirait pas à faire fondre les matières refroidissantes ajoutées, mais mettrait en péril la lance même ainsi qu'éventuellement le système de refroidissement de la cheminée du creuset. En plus il faut évidemment que la lance comporte des moyens assurant qu'il ne puisse y avoir à aucun moment un contact entre le carbone et l'oxygène, ni dans le corps de la lance, ni dans la mesure du possible sur le trajet entre la tête de la lance et la surface du bain.

Pour fournir l'oxygène de post-combustion, on peut p. ex. prévoir un soufflage d'oxygène subdivisé en une pluralité de jets couvrant une zone sensiblement annulaire qui recouvre en permanence la plus grande partie possible de la surface du bain. Pour exécuter cette technique il est connu d'utiliser des lances qui comprennent plusieurs tuyères inclinées par rapport à l'axe de la lance.

Quant à l'oxygène d'affinage, il peut être fourni par des tuyères qui sont inclinées de 5-20° par rapport à l'axe de la lance, tandis que chaque tuyère destinée à fournir l'oxygène de post-combustion peut présenter un angle d'inclinaison de 25-60° par rapport à l'axe de la tuyère d'oxygène d'affinage voisine.

Le carbone suspendu dans du gaz neutre est projeté suivant l'invention à travers une tuyère qui est disposée dans l'axe du dispositif de soufflage. Ainsi le carbone est dirigé au centre de la surface du bain, dans un état froid et à une vitesse supersonique.

Si on veut utiliser un seul dispositif de soufflage pour introduire dans le bain de l'oxygène et du carbone, il faut évidemment prendre certaines dispositions de prévention d'accidents. En effet le carbone soufflé à travers la tuyère axiale de la lance, présente un pouvoir d'abrasion prononcé, même vis-à-vis des aciers spéciaux. Ainsi il y a risque que les parois de la tuyère centrale soient usées et qu'il y ait une fuite ; dans ce cas une explosion serait probable.

Pour éviter ceci, la tuyère centrale est dotée, suivant l'invention d'une gaine métallique remplie d'un fluide de refroidissement et qui présente un système de surveillance de la pression. En cas d'usure de la paroi et de rupture, le dispositif enregistre une perte de pression et il transmet une consigne appropriée à un système de sécurité, c-à-d. à un interrupteur qui est intégré dans le circuit de commande de la lance de soufflage et qui arrête les opérations en vue du remplacement de la partie défectueuse.

D'autres caractéristiques et avantages ressortiront de la description des dessins, qui montrent une forme d'exécution possible du dispositif de soufflage suivant l'invention. La tête de lance représentée est du type de celle décrite dans le brevet LU 78906.

La figure 1   montre une coupe à travers la tête d'une lance, tandis que

la figure 2   montre une coupe à travers le corps de la même lance.

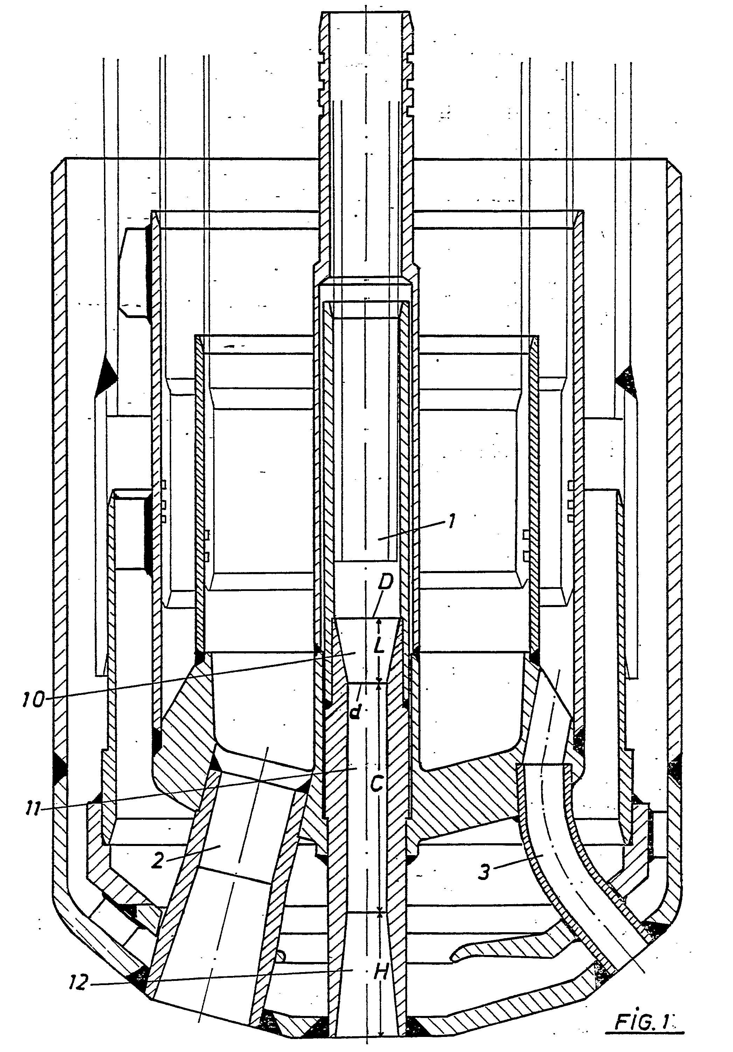

Comme il apparaît à la fig. 1, la tête de lance comporte une tuyère centrale 1, pour véhiculer le jet de carburation, des tuyères 2 pour l'oxygène d'affinage et des tuyères 3 pour l'oxygène de post-combustion. La tuyère centrale comprend un convergent 10, un col 11 et un divergent 12. Pour obtenir un jet fin à la sortie de la lance, il a été trouvé qu'il faut prévoir une tuyère où le convergent 10, le col 11 et le divergent 12 présentent des dimensions particulières. Ainsi la longueur H du divergent 12, la longueur C du col 11 et la longueur L du convergent sont des grandeurs importantes, tout comme les diamètres d'entrée D et de sortie d du convergent 10.

Le comportement du jet de carburation, essentiel pour la réussite du procédé suivant l'invention, peut être optimisé, c.-à-d. qu'il peut être assuré une pénétration du carbone à travers la scorie dans le bain métallique, par la configuration de la tuyère centrale. Pour cela il est prévu que le col 11 présente une longueur C telle qu'elle soit au moins le double de son diamètre d qui est en même temps le diamètre de sortie du convergent 10. Ce col allongé par rapport aux configurations des tuyères d'injection classiques, apporte les avantages escomptés, à condition que soit respecté le rapport entre la longueur et le diamètre du col, vis-à-vis des dimensions relevantes du convergent 10, selon la formule $D/d = 1 K \cdot L/C$, où la grandeur K doit être supérieure à 2.

En plus il y a lieu de considérer la longueur H du divergent 12 qui doit être telle que la grandeur K dans la même formule où l'on considère la longueur totale (C+H) du col 11 et du divergent 12 suivant D/d = 1 + K · L/(C+H), soit supérieure à 3.5.

La configuration du jet n'est donc pas influencée par l'envergure de la section de sortie du divergent 12, si bien que de légères altérations à la surface de la tête du dispositif suivant l'invention, n'affecteront pas nécessairement la configuration du jet.

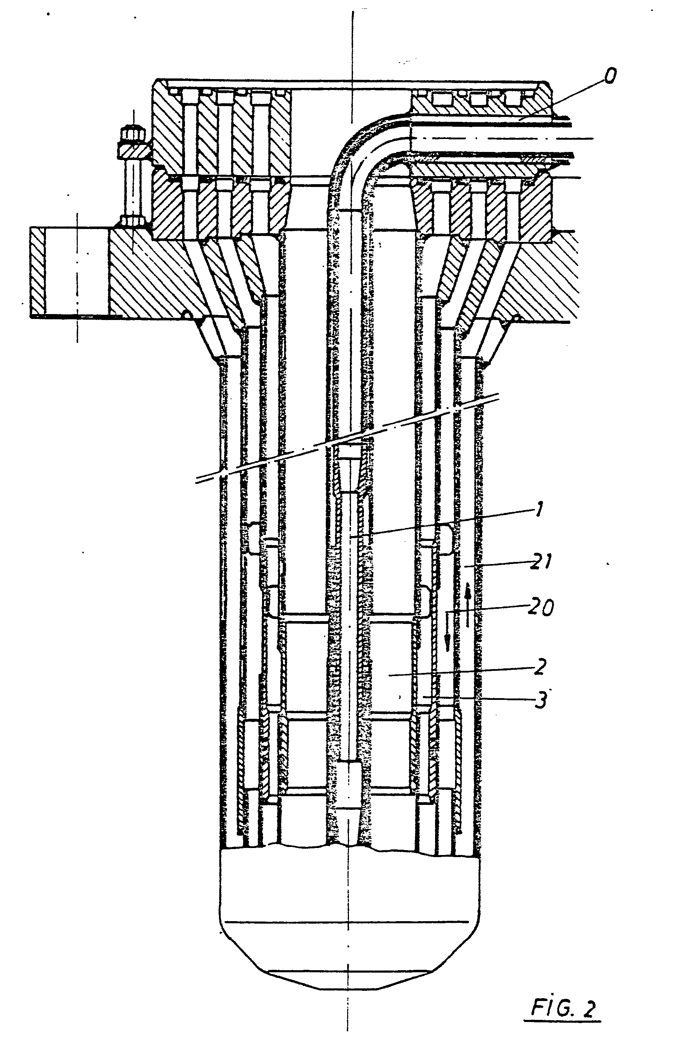

En fig. 2 on distingue les conduits qui mènent aux tuyères 1, 2, 3 disposées dans la tête de la lance ainsi que les conduits 20, 21 qui véhiculent le fluide de refroidissement, normalement de l'eau. Le conduit qui mène à la tuyère centrale 1 présente une gaine 0 dans laquelle se trouve un fluide sous pression. Cette pression est surveillée par un dispositif de mesure approprié, non représenté, qui est relié à un interrupteur intégré dans le circuit de commande de la lance.

## Revendications

1. Procédé d'affinage d'un bain d'acier auquel on ajoute des quantités importantes de matières refroidissantes solides, notamment des mitrailles, qui prévoit que l'on opère un affinage par soufflage d'oxygène par le haut sur la surface du bain et qu'on introduit dans le bain du carbone pulvérulent suspendu dans un jet de gaz neutre, le jet étant dirigé vers la surface du bain, caractérisé en ce que l'on imprime au jet une vitesse de l'ordre de Mach 1.5 à Mach 2.5 et que l'on injecte en même temps dans le bain, par des éléments perméables logés dans le fond du creuset, une quantité de gaz neutre suffisante pour empêcher la scorie de mousser sous l'effet du carbone insufflé.

2. Procédé suivant la revendication 1, caractérisé en ce que l'oxygène soufflé sur la surface du bain est constitué d'une part par au moins un jet dur que l'on dirige sur le bain sous un angle de 5° à 20° par rapport au jet véhiculant le carbone et à une vitesse de l'ordre de Mach 1.5 à Mach 2.5 et d'autre part, par au moins un jet mou d'une vitesse d'environ Mach 0.8 à Mach 1.5 et dont l'axe est incliné de 25° à 60° par rapport à l'axe du jet dur d'oxygène.

3. Procédé suivant la revendication 1 ou 2, caractérisé en ce que l'on dispose de préférence 4 jets durs d'oxygène d'affinage autour du jet central vertical de carburation et que l'on prévoit un nombre égal ou supérieur de jets mous d'oxygène de post-combustion.

4. Procédé suivant la revendication 1, caractérisé en ce que l'on injecte à travers les éléments perméables une quantité de 0 à 0,3 Nm³ de gaz neutre par minute et par tonne de métal.

5. Procédé suivant une des revendications 1-4, caractérisé en ce que l'on dispose la tête de la lance à une distance telle vis-à-vis de la surface du bain, que la durée du trajet libre du carbone est de l'ordre de 0.02 secondes.

6. Procédé suivant la revendication 1, caractérisé en ce que l'on utilise une matière carbonée d'une granulométrie telle qu'au moins 90 % des particules présentent un diamètre inférieur à 1 mm.

7. Dispositif pour l'affinage d'un bain d'acier auquel on ajoute des quantités importantes de matières refroidissantes solides, notamment des mitrailles, l'affinage étant effectué par soufflage d'oxygène par le haut sur la surface du bain et par introduction dans le bain de carbone pulvérulent suspendu dans un jet de gaz neutre, le jet étant dirigé vers la surface du bain, qui comprend une tuyère (1) centrale, verticale, pour guider le jet de carbone, au moins une tuyère (2) pour l'oxygène d'affinage et un nombre égal ou supérieur de tuyères (3) pour l'oxygène de post-combustion, les tuyères d'affinage étant inclinées de 5-20° par rapport à l'axe de la lance, tandis que les tuyères pour l'oxygène de post-combustion présentent ·un angle d'inclinaison de 25-60° par rapport à l'axe de la tuyère d'oxygène d'affinage voisine et selon lequel la tuyère centrale (1) présente une gaine (0) remplie d'un fluide et est munie d'un système de surveillance de la pression dudit fluide, ledit système étant relié à un interrupteur qui est intégré dans le circuit de commande du dispositif.

8. Dispositif suivant la revendication 7, caractérisé en ce que la tuyère centrale présente un convergent (10), un col (11) et un divergent (12), la longueur (C) du col (11) étant au moins le double de son diamètre (d).

9. Dispositif suivant la revendication 8, caractérisé en ce que le diamètre (D) de la section d'entrée du convergent (10), la longueur (L) du convergent (10), le diamètre (d) du col (11) et la longueur (C) du col (11) sont liés par la formule D/d = 1 + K · L/C, où K est supérieur à 2.

## Claims

1. Process for refining a metal bath containing substantial quantities of solid cooling matter, in particular scrap metal, which provides for a refining operation through blowing of oxygen from the top on to the surface of the bath and introducing powdered carbon suspended in a neutral gas jet into the bath, said jet being directed on to the bath surface, characterized in that a velocity of the order of Mach 1.5 to Mach 2.5 is imparted to the jet and in that a quantity of neutral gas is injected simultaneously into the bath, through permeable elements lodged in the bottom of the vessel, which is sufficient to prevent foaming of the slag under the effect of the added carbon.

2. Process according to claim 1, characterized in that the oxygen blown onto the bath surface consists, on the one hand, of at least one hard jet which is directed onto the bath at an angle of 5° to 20° with respect to the carbon bearing jet and at a velocity in the range of Mach 1.5 to Mach 2.5 and, on the other hand, of at least one soft jet having a velocity of approximately Mach 0.8 to Mach 1.5 and the axis of which is inclined by 25° to 60° respect to the axis of the hard oxygen jet.

3. Process according to claims 1 or 2, characterized in that preferably 4 hard jets of refining oxygen are arranged around the central vertical carburation jet and in that there is provided an equal or greater number of post-combustion soft oxygen jets.

4. Process according to claim 1, characterized in that an amount of 0 to 0.3 Nm³ of neutral gas per minute and per ton of metal is injected through the elements into the melt.

5. Process according to any one of claims 1-4, characterized in that the lance head is located at such a distance, with respect to the bath surface, that the trajectory of the carbon has a duration of about 0.02 seconds.

6. Process according to claim 1, characterized in that there is used a carbonaceous material with a grain size distribution such that at least 90 % of the particles have a diameter smaller than 1 mm.

7. Apparatus for refining a metal bath containing substantial quantities of solid cooling matter, in particular scrap metal, the refining being made through blowing of oxygen from the top onto the surface of the bath and introducing powdered carbon suspended in a neutral gas jet into the bath, said jet being directed onto the bath surface, the apparatus comprising a central, vertical nozzle (1) for the carburation jet, at least one nozzle (2) for the refining oxygen and an equal or greater number of nozzles (3) for the post-combustion oxygen, the refining nozzles being inclined by 5°-20° with respect to the lance axis, while the nozzles for the post-combustion oxygen have an inclination of 25°-60° with respect to the axis of the neighboring refining oxygen nozzle and the central nozzle (1) having a sheath (0) filled with a fluid provided with a pressure monitoring system, connected to a switch that is integrated in the control circuit of the apparatus.

8. Apparatus according to claim 7, characterized in that the central nozzle has a convergent component (10), a neck (11) and a divergent component (12), the length (C) of the neck (11) being at least twice as large as its diameter (d).

9. Apparatus according to claim 8, characterized in that the diameter (D) of the inlet section of the convergent component (10), the length (L) of the convergent component (10), the diameter (d) of the neck (11) and the length (C) of the neck (11) are related in the formula $D/d = 1 + K \cdot L/C$, where K is greater than 2.

**Patentansprüche**

1. Verfahren zum Frischen eines Stahlbades das mit grossen Mengen an festen Kühlstoffen insbesondere Schrott beschickt wird, welches vorsieht, dass ein Frischen durch Sauerstoffblasen von oben auf die Badoberfläche vorgenommen wird und in einem neutralen Trägergas-Strahl verteilter Kohlenstoff in die Schmelze eingeführt wird, wobei der Strahl auf die Badoberfläche ausgerichtet ist, dadurch gekennzeichnet, dass der Strahl auf eine Geschwindigkeit in der Grössenordnung von Mach 1,5 bis Mach 2,5 gebracht wird und, dass zur gleichen Zeit, mittels im Gefässboden eingelassenen gasdurchlässigen Baukörpern, eine genügende Menge Inertgas in das Bad eingeblasen wird, um eine Schäumen der Schlacke durch den eingeblasenen Kohlenstoff zu vermeiden.

2. Verfähren gemäss Anspruch 1, dadurch gekennzeichnet, dass der auf die Badoberfläche geblasene Sauerstoff auf der einen Seite aus wenigstens einem harten Strahl besteht, welcher relativ zum Kohlenstoff-Strahl eine Neigung von 5° bis 20° aufweist und eine Geschwindigkeit in der Grössenordnung von Mach 1,5 bis Mach 2,5 besitzt und auf der anderen Seite aus einem weichen Strahl besteht welcher eine Geschwindigkeit von etwa Mach 0,8 bis Mach 1,5 besitzt und dessen Achse einen Winkel von 25° bis 60° relativ zur Achse des harten Sauerstoffstrahls bildet.

3. Verfahren gemäss den Ansprüchen 1 oder 2, dadurch gekennzeichnet, dass vorteilhafterweise 4 harte Sauerstoffstrahle um den zentralen, vertikalen Kohlenstoffstrahl angeordnet werden und, dass eine gleiche oder grössere Anzahl weiche Strahle von Nachverbrennungs-Sauerstoff vorgesehen werden.

4. Verfahren gemäss Anspruch 1, dadurch gekennzeichnet, dass durch die gasdurchlässigen Baukörper eine Menge von 0 bis 0,3 Nm³ Inertgas pro Minute und pro Tonne Metall eingeblasen wird.

5. Verfahren gemäss einem der Ansprüche 1-4, dadurch gekennzeichnet, dass der Lanzenkopf auf eine derartige Distanz von der Badoberfläche angeordnet wird, dass die freie Flugzeit des Kohlenstoffs etwa 0,02 Sekunden beträgt.

6. Verfahren gemäss Anspruch 1, dadurch gekennzeichnet, dass man Kohlenstoff von einer derartigen Körnung verwendet, dass wenigstens 90 % der Körner einen Durchmesser aufweisen, der kleiner ist als 1 mm.

7. Vorrichtung zum Frischen eines Stahlbades das mit grossen Mengen an festen Kühlstoffen insbesondere Schrott beschickt wird, wobei das Frischen durch Sauerstoffblasen auf die Badoberfläche und durch Einführen von in einem neutralen Trägergas verteilten pulverförmigen Kohlenstoff erfolgt, wobei der Kohlenstoff-Strahl auf die Badoberfläche ausgerichtet ist, welche Vorrichtung eine zentrale, vertikale Düse (1) für den Kohlenstoffstrahl, wenigstens eine Düse (2) für den Sauerstoff zum Frischen und eine gleiche oder grössere Anzahl von Düsen (3) für den Sauerstoff zum Nachverbrennen umfasst, wobei die Düsen für den Sauerstoff zum Frischen einen Neigungswinkel von 5-20° relativ zur Lanzen-Achse besitzen, während die Düsen für den Sauerstoff zum Nachverbrennen einen Neigungswinkel von 25-60° relativ zur benachbarten Frisch-Düse besitzen und gemäss welcher die zentrale Düse (1) eine mit einem Fluid gefüllte Ummantelung (0) aufweist und mit einem Ueberwachungssystem des Fluid-Druckes versehen ist, wobei das Ueberwachungssystem mit einem Schalter in Verbindung steht, der in der Steuerschaltung der Vorrichtung integriert ist.

8. Vorrichtung gemäss Anspruch 7, dadurch gekennzeichnet, dass die zentrale Düse einen konvergenten Teil (10), einen Hals (11) und einen divergenten Teil (12) vorweist, wobei die Länge (C) des Halses (11) wenigstens zweimal so gross ist als ihr Durchmesser (d).

9. Vorrichtung gemäss Anspruch 8, dadurch gekennzeichnet, dass der Durchmesser (D) des Eingangsquerschnittes des konvergenten Teils (10), die Länge (L) des konvergenten Teils (10), der Durchmesser (d) des Halses (11) und die Länge (C) des Halses (11) in folgender Gleichung zusammenhängen : D/d = 1 + K · L/C, wobei K grösser als 2 ist.

*FIG.1*

FIG. 2